# EUROPÄISCHE PATENTSCHRIFT

(11) **EP 2 998 694 B1**
(45) Veröffentlichungstag und Bekanntmachung des Hinweises auf die Patenterteilung: **23.02.2022**
(21) Anmeldenummer: 15182487.7
(22) Anmeldetag: 26.08.2015
(51) Int. Cl.: G01B 11/24, G02B 27/01

(54) **VERFAHREN UND VORRICHTUNG ZUM BESTIMMEN DER 3D-KOORDINATEN EINES OBJEKTS**
METHOD AND DEVICE FOR DETERMINING THE 3D COORDINATES OF AN OBJECT
PROCEDE ET DISPOSITIF DESTINES A DETERMINER LES COORDONNEES 3D D'UN OBJET

(30) Priorität: 27.08.2014 DE 102014012710
(43) Veröffentlichungstag der Anmeldung: 23.03.2016
(73) Patentinhaber: Carl Zeiss Optotechnik GmbH, 83115 Neubeuern (DE)
(72) Erfinder: Frey, Alexander, 83233 Bernau a. Chiemsee (DE)
(74) Vertreter: Zinnecker, Armin

(56) Entgegenhaltungen:
- EP-A1- 2 034 269
- EP-A2- 1 724 549
- DE-A1- 19 536 297
- DE-A1-102008 020 772
- DE-A1-102009 032 771
- JP-A- 2011 112 579
- US-A1- 2002 049 566
- US-B2- 7 840 042

## Beschreibung

Die Erfindung betrifft ein Verfahren zum Bestimmen der 3D-Koordinaten eines Objekts, ein Verfahren zum Kalibrieren einer Vorrichtung zum Bestimmen der 3D-Koordinaten eines Objekts und eine Vorrichtung zur Durchführung derartiger Verfahren.

Aus der DE 10 2005 043 912 B4 ist ein Verfahren zum Bestimmen der 3D-Koordinaten der Oberfläche eines Objekts bekannt, bei dem die 3D-Koordinaten einer Teil-Oberfläche des Objekts durch ein 3D-Messgerät bestimmt werden. Das 3D-Messgerät weist Detektoren auf, deren Position durch ein Tracking-System bestimmt wird. Durch das 3D-Messgerät werden die 3D-Koordinaten weiterer Teil-Oberflächen des Objekts bestimmt. Die 3D-Koordinaten der Teil-Oberflächen des Objekts werden von einer Verarbeitungseinrichtung zusammengesetzt.

Aus der DE 10 2009 032 262 A1 ist ein Verfahren zur Bestimmung der 3D-Koordinaten eines Objekts bekannt, bei dem das Objekt von mehreren Referenzkulissen mit Referenzmarken umgeben ist. Von dem Objekt werden mehrere Aufnahmen derart hergestellt, dass darauf jeweils ein Teil des Objekts und ein Teil einer Referenzkulisse enthalten ist.

Die DE 10 2010 018 979 A1 offenbart ein Verfahren zum Bestimmen der 3D-Koordinaten der Oberfläche eines Objekts, bei dem die Oberfläche des Objekts von einem Scanner zur Gewinnung von Objektdaten abgetastet wird. Die Position und Orientierung des Scanners wird zur Gewinnung von Lagedaten bestimmt, beispielsweise durch ein Tracking-System.

Aus der DE 10 2011 011 360 A1 ist ein Verfahren zur Bestimmung der 3D-Koordinaten eines Objekts bekannt, bei dem das Objekt vor einem Feld von Referenzmarken positioniert wird. Das Objekt wird mit einer Vorrichtung aufgenommen, die einen Projektor zum Projizieren eines Musters auf das Objekt und eine mit dem Projektor verbundene Kamera aufweist. Eine oder mehrere Referenzmarken des Feldes von Referenzmarken werden von einer oder mehreren Referenzkameras aufgenommen.

Aus der DE 10 2011 114 674 A1 ist ein Verfahren zum Bestimmen der 3D-Koordinaten eines Objekts bekannt, bei dem ein Muster auf das Objekt projiziert wird, das von dem Objekt reflektierte Licht von einer Kamera aufgenommen wird und die von der Kamera aufgenommenen Aufnahmen ausgewertet werden. Ferner werden Referenzmarken auf oder neben dem Objekt von einer Referenzkamera aufgenommen, wobei die Referenzkamera ein größeres Gesichtsfeld als die Kamera hat.

JP 2011 112579 A offenbart ein Verfahren nach dem Oberbegriff des Anspruchs 1. Aus der US 2002/049566 A1 und der DE 10 2008 020 772 A1 sind Datenbrillen bekannt.

Die EP 1 724 549 A2, US 7 840 042 B2 und EP 2 034 269 A1 offenbaren weitere Verfahren zum Bestimmen der 3D-Koordinaten eines Objekts.

Aus der DE 195 36 297 A1 ist ein Verfahren zur geometrischen Kalibrierung von optischen 3D-Sensoren bekannt.

Die DE 10 2009 032771 A1 offenbart eine Messeinrichtung zum dreidimensionalen optischen Vermessen von Objekten.

Aufgabe der Erfindung ist es, verbesserte Verfahren und verbesserte Vorrichtungen der eingangs angegebenen Art vorzuschlagen.

Erfindungsgemäß wird diese Aufgabe durch ein Verfahren zum Bestimmen der 3D-Koordinaten eines Objekts gemäß Anspruch 1 und eine Vorrichtung gemäß Anspruch 7 gelöst.

Bei dem Verfahren wird eine Teil-Oberfläche des Objekts durch ein 3D-Messgerät aufgenommen, und es werden die 3D-Koordinaten dieser Teil-Oberfläche des Objekts bestimmt. Anschließend werden eine oder mehrere weitere Teil-Oberflächen des Objekts durch das 3D-Messgerät aufgenommen, und es werden die 3D-Koordinaten dieser Teil-Oberflächen bestimmt. Die Aufnahmen können in Form von Standbildern oder als Videoaufnahmen hergestellt werden. Die 3D-Koordinaten der Teil-Oberflächen des Objekts werden von einer Verarbeitungseinrichtung zusammengesetzt. Die Zusammensetzung der 3D-Koordinaten der Teil-Oberflächen kann in einem übergeordneten (absoluten) Koordinatensystem stattfinden.

Gemäß der Erfindung werden die Aufnahmen und/oder die 3D-Koordinaten einer oder mehrerer Teil-Oberflächen des Objekts auf einer Datenbrille dargestellt. Weiterhin ist vorgesehen, dass das Messvolumen des 3D-Messgeräts auf der Datenbrille angezeigt wird, so dass eine Bedienperson beurteilen kann, welche Teil-Oberflächen erfasst werden können, und/oder dass das 3D-Messgerät einen Scanner umfasst, dessen Position und Orientierung durch ein Tracking-System bestimmt wird, wobei das Messvolumen des Tracking-Systems auf der Datenbrille dargestellt wird, so das eine Bedienperson sicherstellen kann, dass sich der Scanner innerhalb des Messvolumens des Tracking-Systems befindet.

Die Datenbrille kann von einer Bedienperson getragen werden. Die Aufnahmen können in Form von Standbildern oder als Videoaufnahmen dargestellt werden.

Dadurch, dass die Aufnahmen als Standbilder und/oder als Videoaufnahmen und/oder 3D-Koordinaten auf der Datenbrille wiedergegeben werden wird die Handhabung des Verfahrens für die Bedienperson erleichtert.

Die Datenbrille kann eine neue, verbesserte Art der Interaktion mit dem Verfahren und der Vorrichtung zum Bestimmen der 3D-Koordinaten eines Objekts ermöglichen. Ein Vorteil kann darin bestehen, dass zur Positionierung des 3D-Messgeräts, zum Datenabruf und/oder zur Steuerung des Verfahrens oder der Vorrichtung die Hände der Bedienperson frei bleiben können. Die Datenbrille kann über mindestens ein Display verfügen, über das Informationen für die Bedienperson dargestellt werden können. Die Bedienperson kann allerdings, im Gegensatz zu Virtual-Reality-Brillen, die Umwelt weiterhin wahrnehmen, da das Display der Datenbrille nur einen Teil des Blickfelds abdeckt und/oder semitransparent ist.

Es ist möglich, dass die Datenbrille eine Kamera aufweist, die Bilder oder Videos aufnehmen kann. Diese Bilder oder Videos können ausgewertet und, vorzugsweise mit anderen Daten überlagert, im Display der Datenbrille dargestellt werden. Dieses Verfahren wird auch als "Augmented Reality" bezeichnet. Die Bedienung der Datenbrille kann über Tasten oder Touch-Sensoren erfolgen, die am Gestell der Datenbrille angeordnet sein können, und/oder über eine Spracheingabe, die über ein Mikrofon erfolgen kann, das an der Datenbrille vorgesehen ist. Auch Kombinationen mit anderen Geräten sind möglich, beispielsweise mit einer Armbanduhr (smart watch) und/oder einer Fernbedienung. Es ist möglich, die Daten von der Datenbrille und/oder zu der Datenbrille zu übertragen, insbesondere drahtlos zu übertragen, insbesondere per WLAN. Der Datenaustausch kann mit der Verarbeitungseinrichtung, insbesondere einem PC, und/oder einem Server im Internet erfolgen, der die Auswertung der Daten vornehmen kann.

Vorteilhafte Weiterbildungen sind in den Unteransprüchen beschrieben.

Vorteilhaft ist es, wenn das 3D-Messgerät einen Projektor zum Projizieren eines Musters auf das Objekt und eine Kamera zum Aufnehmen von Bildern des Objekts umfasst. Es können auch mehr als eine Kamera vorhanden sein. Bei dem Muster handelt es sich vorzugsweise um ein Streifenmuster. Das Muster kann als Weißlicht-Muster auf das Objekt projiziert werden, insbesondere als Weißlicht-Streifenmuster. Vorteilhaft ist es, wenn der Projektor und die Kamera fest miteinander verbunden sind. Die von dem Projektor und der Kamera gebildete Einheit kann auch als 3D-Sensor bezeichnet werden.

Nach einer weiteren vorteilhaften Weiterbildung werden Referenzmarken aufgenommen. Die Referenzmarken können von der Kamera aufgenommen werden, die auch die Bilder des Objekts aufnimmt. Für die Aufnahme der Referenzmarken kann allerdings auch eine davon gesonderte Kamera vorhanden sein. Die gesonderte Kamera ist vorzugsweise fest mit dem Projektor und der Kamera bzw. dem 3D-Sensor verbunden. Die Referenzmarken können auf dem Objekt vorhanden sein. Sie können allerdings auch auf dem Objekt oder neben dem Objekt angebracht sein.

Nach einer weiteren vorteilhaften Weiterbildung wird die Position und Orientierung der Kamera oder des 3D-Sensors von dem Tracking-System bestimmt.

Bei dem erfindunsggemäßen Scanner kann es sich um einen Punktscanner oder Linienscanner oder Flächenscanner oder einen taktilen Scanner (touch probe) handeln. Der Scanner kann Detektoren aufweisen, die von dem Tracking-System erkannt werden können, insbesondere Infrarot-Detektoren.

Nach einer weiteren vorteilhaften Weiterbildung umfasst das 3D-Messgerät einen Tastkörper, dessen Position durch das Tracking-System bestimmt wird. Der Tastkörper ist vorzugsweise an einem Messtaster, der auch als Touchprobe bezeichnet werden kann, vorgesehen. Als Tastkörper ist insbesondere eine Tastkugel geeignet, aber auch andere Formen von Tastkörpern.

Eine weitere vorteilhafte Weiterbildung ist dadurch gekennzeichnet, dass das 3D-Messgerät eine Photogrammmetriekamera umfasst und dass an dem Objekt und/oder in dessen Umgebung Messmarken angebracht sind. Es ist möglich, das Objekt mit Messmarken zu bekleben. Die Messmarken können allerdings auch auf andere Weise angebracht werden und/oder aufprojiziert werden. Stattdessen oder zusätzlich können die Messmarken in der Umgebung des Objekts angebracht sein, beispielsweise auf einem Rahmen und/oder auf Leisten.

In einer bevorzugten Ausgestaltung wird das Verfahren zum Kalibrieren oder zum Überprüfen der Kalibrierung einer Vorrichtung zum Bestimmen der 3D-Koordinaten eines Objekts eingesetzt. Die Vorrichtung zum Bestimmen der 3D-Koordinaten des Objekts umfasst ein 3D-Messgerät, das einen Projektor zum Projizieren eines Musters auf das Objekt und eine Kamera zum Aufnehmen von Bildern des Objekts umfasst. Das 3D-Messgerät, das auch als 3D-Sensor bezeichnet werden kann, nimmt eine Kalibrierplatte aus einer ersten Position auf. Das 3D-Messgerät kann die Kalibrierplatte aus einer oder mehreren weiteren Positionen aufnehmen. Erfindungsgemäß werden die Aufnahme und/oder die weitere oder weiteren Aufnahmen auf einer Datenbrille dargestellt. Die weitere oder weiteren Aufnahmen können aus einer oder mehreren weiteren Positionen aufgenommen werden. In diesen weiteren Positionen ist die relative Positionierung des 3D-Messgeräts zu der Kalibrierplatte verändert. Dies kann dadurch erfolgen, dass das 3D-Messgerät und/oder die Kalibrierplatte bewegt werden.

Das 3D-Messgerät kann wie oben bereits beschrieben ausgebildet sein. Die Darstellung auf der Datenbrille kann die oben bereits beschriebenen Besonderheiten aufweisen.

Vorteilhaft ist es, wenn die Datenbrille eine Datenempfangseinrichtung zum Empfangen von Daten von einer oder der Verarbeitungseinrichtung, insbesondere einem PC, aufweist. Bei der Datenempfangseinrichtung kann es sich insbesondere um ein WLAN-Modul handeln.

Nach einer weiteren vorteilhaften Weiterbildung weist die Datenbrille eine Datenübertragungseinrichtung zum Übertragen von Daten zu einer oder der Verarbeitungseinrichtung auf, insbesondere zu einem PC. Bei der Verarbeitungseinrichtung kann es sich um diejenige Verarbeitungseinrichtung handeln, von der die Datenbrille Daten empfängt, oder um eine gesonderte Verarbeitungseinrichtung. Die Datenübertragungseinrichtung kann ein Mikrofon und/oder ein touch-panel und/oder ein WLAN-Modul umfassen.

Auf der Datenbrille können weitere Daten dargestellt werden. Diese Daten werden vorzugsweise zu der Datenbrille übertragen. Insbesondere handelt es sich um Daten, die von der Bedienperson benutzt werden. Die Daten können zusätzlich zu den oben genannten Daten die Lage des 3D-Messgeräts und/oder Belichtungseinstellungen der Kamera umfassen.

Vorteilhaft ist es, wenn von der Datenbrille Daten übertragen werden. Bei diesen Daten kann es sich insbesondere um Sprachkommandos, Messparameter, die Belichtungszeit der Kamera, den Belichtungswert der Kamera und/oder Kommandos zum Auslösen einer Messung handeln.

Die erfindungsgemäße Vorrichtung ist in Anspruch 7 beansprucht und umfasst ein 3D-Messgerät zum Aufnehmen von Teil-Oberflächen des Objekts und zum Bestimmen der 3D-Koordinaten dieser Teil-Oberflächen des Objekts, eine Verarbeitungseinrichtung, insbesondere einen PC, zum Zusammensetzen der 3D-Koordinaten der Teil-Oberflächen des Objekts und eine Datenbrille zum Darstellen der Aufnahmen und/oder der 3D-Koordinaten einer oder mehrerer Teil-Oberflächen des Objekts.

Das 3D-Messgerät umfasst bevorzugt einen Projektor zum Projizieren eines Musters auf das Objekt und eine Kamera zum Aufnehmen von Bildern des Objekts.. Die Vorrichtung umfasst bevorzugt ferner eine Kalibrierplatte.

Vorteilhafte Weiterbildungen der erfindungsgemäßen Vorrichtungen sind in den weiteren Unteransprüchen beschrieben.

Ausführungsbeispiele der Erfindung werden nachfolgend anhand der beigefügten Zeichnung im Einzelnen erläutert. In der Zeichnung zeigt
- Fig. 1: eine Vorrichtung zum Bestimmen der 3D-Koordinaten eines Objekts mit einem 3D-Messgerät, das einen Projektor und eine Kamera umfasst, und mit einer Datenbrille,
- Fig. 2: eine Vorrichtung zum Bestimmen der 3D-Koordinaten eines Objekts mit einem Scanner, einem Tracking-System und einer Datenbrille,
- Fig. 3: eine Vorrichtung zum Bestimmen der 3D-Koordinaten eines Objekts mit einem Messtaster, an dem ein Tastkörper vorgesehen ist, einem Tracking-System und einer Datenbrille,
- Fig. 4: eine Vorrichtung zum Bestimmen der 3D-Koordinaten eines Objekts mit einer Photogrammmetriekamera und einer Datenbrille und
- Fig. 5: eine Vorrichtung zum Kalibrieren einer Vorrichtung zum Bestimmen der 3D-Koordinaten eines Objekts mit einem 3D-Messgerät, das einen Projektor und eine Kamera umfasst, und mit einer Datenbrille.

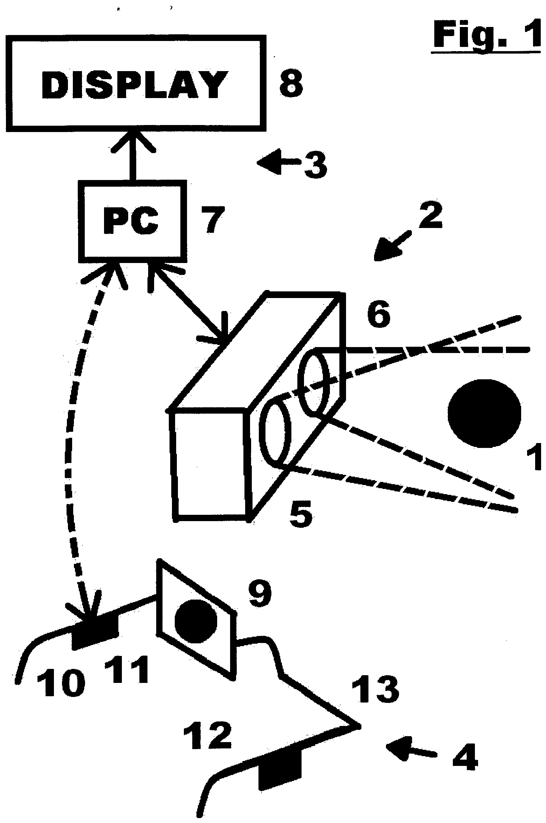

Die in Fig. 1 gezeigte Vorrichtung zum Bestimmen der 3D-Koordinaten eines Objekts 1 umfasst ein 3D-Messgerät 2, eine Verarbeitungseinrichtung 3 und eine Datenbrille 4. Das 3D-Messgerät 2 ist als 3D-Sensor ausgebildet. Es umfasst einen Projektor 5 zum Projizieren eines Musters auf das Objekt 1 und eine Kamera 6 zum Aufnehmen von Bildern des Objekts 1. Der Projektor 5 projiziert ein Streifenmuster mit Weißlicht auf das Objekt 1.

Die Verarbeitungseinrichtung 3 umfasst einen Computer, nämlich einen PC 7, der einen Bildschirm 8 aufweist.

Die Datenbrille 4 umfasst ein Display 9, eine Datenempfangseinrichtung 10, eine Datenübertragungseinrichtung 11, eine weitere Datenübertragungseinrichtung 12 und ein Mikrofon 13. Das Display 9 ist als transparente Scheibe aus Glas oder aus einem anderen Werkstoff, insbesondere aus Kunststoff, ausgebildet. Es befindet sich vor einem Auge der Bedienperson. Die Datenempfangseinrichtung 10 und die Datenübertragungseinrichtung 11 sind an einem Bügel der Datenbrille 4 angeordnet. Sie werden von einem WLAN-Modul gebildet. Die weitere Datenübertragungseinrichtung 12 ist an dem anderen Bügel der Datenbrille 4 vorgesehen. Sie ist als touch-panel ausgebildet. Das Mikrofon 13, das ebenfalls als Datenübertragungseinrichtung dient, ist am vorderen Ende eines Bügels der Datenbrille 4 angeordnet.

Zum Bestimmen der 3D-Koordinaten des Objekts 1 ist es erforderlich, mehrere unterschiedliche Aufnahmen des Objekts 1 herzustellen. Hierfür müssen das 3D-Messgerät 2 und das Objekt 1 relativ zueinander bewegt werden. Zunächst wird eine erste Teiloberfläche des Objekts 1 aufgenommen. Danach wird die relative Lage des 3D-Messgeräts 2 zu dem Objekt 1 verändert, und das Objekt 1 wird von der Kamera 6 des 3D-Messgeräts 2 aus einer anderen Perspektive aufgenommen. Die Aufnahmen des Objekts 1 können sich überlappen.

Beim Betrieb kann eine Aufnahme des Objekts 1 auf der Datenbrille 4 dargestellt werden, insbesondere die erste Aufnahme. Die Bedienperson kann überprüfen, ob die Aufnahme des Objekts 1 die richtige Lage aufweist, und sie kann diese Lage bei Bedarf ändern. Dies ist schnell und einfach möglich, da die Bedienperson die Aufnahme im Display 9 der Datenbrille 4 sieht und dafür nicht den Bildschirm 8 der Verarbeitungseinrichtung 3 benötigt. Sie muss also nicht ihre Position verändern, um den Bildschirm 8 zu erreichen. Die Bedienperson muss insbesondere nicht die Aufnahme der Kamera 6 auf dem Bildschirm 8 kontrollieren, um die Lage des 3D-Messgeräts 2 zu justieren.

Bei der Ausrichtung des 3D-Messgeräts 2 können weitere Parameter wie beispielsweise die Belichtungszeit für die Kamera 6 eingestellt werden. Wenn das 3D-Messgerät 2 richtig positioniert ist kann die Messung ausgelöst werden. Die Teil-Oberfläche des Objekts 1 wird aufgenommen, und die 3D-Koordinaten der Teil-Oberfläche des Objekts 1 werden bestimmt.

Anschließend wird das 3D-Messgerät 2 in einer neuen Perspektive zum Objekt 1 positioniert. Dabei können die Aufnahme und/oder die 3D-Koordinaten der ersten oder vorangegangenen Teil-Oberfläche des Objekts 1 auf der Datenbrille 4 dargestellt werden. Hierdurch kann die Positionierung des 3D-Messgeräts 2 für die Bedienperson erleichtert werden. Die Bedienperson kann insbesondere das 3D-Messgerät 2 in der Weise positionieren, dass die neu herzustellende Aufnahme die vorangegangene Aufnahme teilweise überlappt.

Die 3D-Koordinaten der Teil-Oberflächen des Objekts werden von der Verarbeitungseinrichtung 3 zusammengesetzt und in ein globales Koordinatensystem überführt. Dabei ist es möglich, die Qualität der 3D-Koordinaten zu kontrollieren, bevor die nächste Aufnahme des Objekts 1 gemacht wird.

Die Datenbrille 4 kann das Live-Bild der Kamera 6 im Display 9 anzeigen. Ferner können Messparameter angezeigt werden. Es ist möglich, dass die Messung ausgelöst wird, beispielsweise über ein Sprachkommando, das von dem Mikrofon 13 empfangen und übertragen wird. Damit kann die Bedienperson das 3D-Messgerät 2 und/oder das Objekt 1 optimal plazieren und die Messung auslösen, ohne an den PC 7 bzw. dessen Bildschirm 8 zurückkehren zu müssen.

Nach der Messung können die Qualität der 3D-Daten und der Ausrichtung aufbereitet und/oder angezeigt werden. Sie können ebenfalls auf dem Display 9 der Datenbrille 4 dargestellt werden. Die Bedienperson muss erst dann an den PC 7 bzw. dessen Bildschirm 8 zurückkehren, wenn das Objekt 1 vollständig erfasst worden ist.

Mit der Ausführungsform nach Fig. 1 kann folgendes Verfahren durchgeführt werden: Während der Vermessung des Objekts 1 mit dem 3D-Messgerät 2 muss die Bedienperson den 3D-Sensor 2 und/oder das Objekt 1 bewegen, damit das Objekt 1 aus unterschiedlichen Blickwinkeln aufgenommen werden kann und die 3D-Daten des gesamten Objekts 1 zusammengesetzt werden können. Das Live-Kamera-Bild der Kamera 6 des 3D-Messgeräts 2 wird von dem PC 7 erfasst und über WLAN auf das Display 9 der Datenbrille 4 übertragen. Zusätzlich können noch die aktuelle Lage des 3D-Sensors 2, das Messvolumen und weitere Status-Informationen auf dem Display 9 angezeigt werden. Dadurch kann die Bedienperson beurteilen, welche Teil-Oberflächen erfasst werden können und/oder ob beispielsweise die Belichtungseinstellungen der Kamera 6 korrekt sind.

Die Bedienperson kann über Sprachkommandos, die von dem Mikrofon 13 übertragen werden, oder über das touch-panel 12 an der Datenbrille 4 die Messparameter einstellen, beispielsweise die Belichtungszeit, und die Messung auslösen. Die Befehle werden per WLAN von der Datenbrille 4 an den PC 7 übertragen.

Der PC 7 führt die 3D-Messung durch. Dabei werden durch den Projektor 5 unterschiedliche Muster auf das Objekt 1 projiziert, die die Kamera 6 erfasst. Daraus berechnet der PC 7 die 3D-Daten. Nach der Messung kann der PC 7 die Qualität der 3D-Daten und der Ausrichtung des 3D-Sensors 2 analysieren und das Ergebnis auf dem Display 9 der Datenbrille 4 darstellen.

Die Bedienperson kann die Messung bestätigen, beispielsweise über ein Sprachkommando, das über das Mikrofon 13 übertragen wird, oder über das touch-panel 12, wodurch der PC 7 diese 3D-Daten den bereits erfassten 3D-Daten hinzufügt. Dieser Schritt kann auch automatisch erfolgen. Die Bedienperson fährt dann damit fort, dass eine weitere Teil-Oberfläche des Objekts 1 erfasst wird. Dieser Vorgang wird wiederholt, bis das Objekt 1 vollständig erfasst worden ist. Erst dann muss die Bedienperson wieder an den PC 7 zurückkehren.

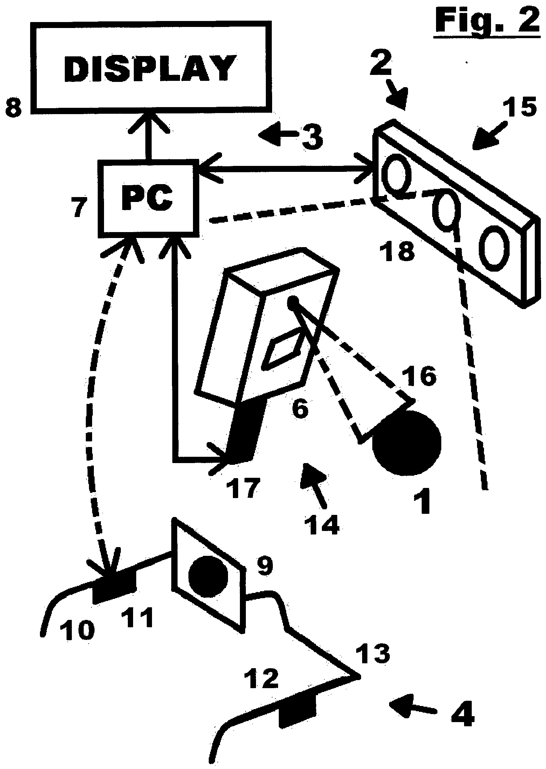

Bei der Ausführungsform nach Fig. 2 sind übereinstimmende Teile mit denselben Bezugszeichen versehen; sie werden nicht erneut beschrieben. Hier umfasst das 3D-Messgerät 2 einen Scanner 14 und ein Tracking-System 15. Der Scanner 14 ist als Linienscanner ausgebildet. Er umfasst eine Scaneinrichtung, die eine Laserlinie 16 auf das Objekt 1 projiziert, und eine Kamera 6, die das Objekt 1 einschließlich der auf das Objekt 1 projizierten Laserlinie 16 und deren Umgebung aufnimmt. Ferner ist der Scanner 14 als handgehaltener Scanner mit einem Handgriff 17 ausgebildet.

Das Tracking-System 15 umfasst drei Kameras 18. An dem Scanner 14 sind Detektoren angeordnet (in der Zeichnung nicht dargestellt), die von den Kameras 18 erfasst werden können. Auf diese Weise bestimmt das Tracking-System 15 die Lage und Orientierung des Scanners 14.

Im Betrieb wird durch den Scanner 14 eine Aufnahme einer Teil-Oberfläche des Objekts 1 hergestellt. Dies kann dadurch geschehen, dass die Laserlinie 16 eine Teil-Oberfläche des Objekts 1 überstreicht. Die bisher aufgenommene Teil-Oberfläche des Objekts 1 kann auf dem Display 9 der Datenbrille 4 dargestellt werden. Auf diese Weise erfährt die Bedienperson, welche Teil-Oberflächen des Objekts 1 bereits aufgenommen worden sind und welche Teil-Oberflächen des Objekts 1 noch aufgenommen werden müssen.

An dem Scanner 14, insbesondere an dessen Handgriff 17, kann ein Schalter vorgesehen sein (in der Zeichnung nicht dargestellt), durch den eine Aufnahme des Objekts 1 begonnen und/oder beendet werden kann. Auf dem Display 9 der Datenbrille 4 kann das Messvolumen des Tracking-Systems 15 dargestellt werden. Auf diese Weise kann die Bedienperson sicherstellen, dass sich der Scanner 14 innerhalb des Messvolumens des Tracking-Systems 15 befindet. Zur vollständigen Erfassung des Objekts 1 kann es erforderlich werden, das Tracking-System 15 relativ zu dem Objekt 1 an einer anderen Stelle zu positionieren. Auch dieses Umsetzen des Tracking-Systems 15 kann durch eine Darstellung auf dem Display 9 der Datenbrille 4 kontrolliert werden.

Mit der Ausführungsform nach Fig. 2 kann folgendes Verfahren durchgeführt werden: Während der Vermessung des Objekts 1 mit dem 3D-Messgerät 2 muss die Bedienperson den Scanner 14 und/oder das Objekt 1 bewegen, damit das Objekt 1 aus unterschiedlichen Blickwinkeln aufgenommen werden kann und die 3D-Daten des gesamten Objekts 1 zusammengesetzt werden können. Üblicherweise wird der Scanner 14 von der Bedienperson per Hand geführt und dabei von dem stationären Tracking-System 15 erfasst, um die Daten in ein gemeinsames Koordinatensystem überführen zu können.

Das Bild der Kamera 6 des Scanners 14 wird von dem PC 7 erfasst. Ferner wird die aktuelle Position des Scanners 14, die von dem Tracking-System 15 ermittelt worden ist, von dem PC 7 erfasst. Das Bild der Kamera 6 des Scanners 14 und/oder die aktuelle Position des Scanners 14 können über WLAN auf das Display 9 der Datenbrille 4 übertragen und dargestellt werden. Zusätzlich können noch weitere Status-Informationen angezeigt werden, insbesondere die Information, ob sich der Scanner 14 innerhalb des gültigen Messvolumens des Tracking-Systems 15 befindet.

Die Bedienperson kann über Sprachkommandos, die von dem Mikrofon 13 übertragen werden, oder über das touch-panel 12 an der Datenbrille 4 die Messparameter einstellen, beispielsweise die Abtastrate des Scanners 14, und die Messung auslösen. Die Befehle werden per WLAN von der Datenbrille 4 an den PC 7 übertragen.

Der PC 7 berechnet aus den Daten des Scanners 14 und des Tracking-Systems 15 die 3D-Daten und fügt diese den bereits erfassten und berechneten 3D-Daten hinzu. Während des Scannens können auch Informationen über die erfassten 3D-Daten auf dem Display 9 der Datenbrille 4 dargestellt werden. Dadurch kann die Bedienperson beurteilen, welche Teil-Oberflächen des Objekts 1 erfasst werden können und/oder ob die Einstellungen des Scanners 14 korrekt sind, insbesondere dessen Belichtungseinstellungen. Nach der Messung kann der PC 7 die Qualität der 3D-Daten und der Ausrichtung des Scanners 14 analysieren und das Ergebnis auf dem Display 9 der Datenbrille 4 darstellen.

Die Bedienperson kann die Messung bestätigen, beispielsweise über ein Sprachkommando, das über das Mikrofon 13 übertragen wird, oder über das touch-panel 12, wodurch der PC 7 diese 3D-Daten den bereits erfassten 3D-Daten hinzufügt. Dieser Schritt kann auch automatisch erfolgen. Die Bedienperson fährt dann damit fort, dass eine weitere Teil-Oberfläche des Objekts 1 erfasst wird. Dieser Vorgang wird wiederholt, bis das Objekt 1 vollständig erfasst worden ist. Erst dann muss die Bedienperson wieder an den PC 7 zurückkehren.

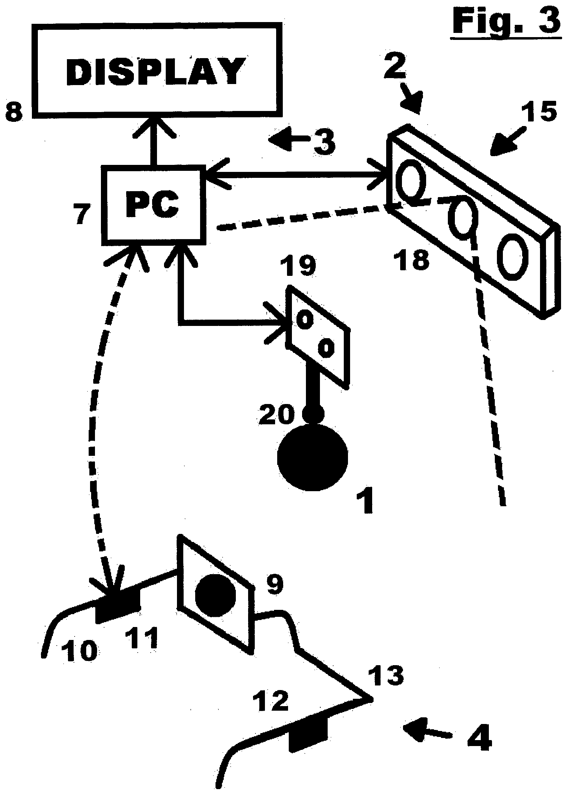

Bei der Ausführungsform nach Fig. 3 sind übereinstimmende Teile mit denselben Bezugszeichen versehen, sodass sie nicht erneut beschrieben werden müssen. Hier umfasst das 3D-Messgerät 2 einen Messtaster 19, der auch als Touchprobe bezeichnet werden kann, und ein Tracking-System 15. An dem Messtaster 19 ist ein Tastkörper 20 vorgesehen, der als Tastkugel ausgebildet ist. An dem Messtaster 19 sind ferner Detektoren angeordnet, die von den Kameras 18 des Tracking-Systems 15 erfasst werden können, sodass das Tracking-System 15 die Lage und Orientierung des Messtasters 19 bestimmen kann. Der Messtaster 19 kann als handgehaltener Messtaster 19 mit einem Handgriff ausgebildet sein. Stattdessen oder zusätzlich kann er allerdings auch auf andere Weise geführt werden, beispielsweise durch ein Handhabungsgerät, insbesondere durch einen Industrieroboter.

Im Betrieb wird die Oberfläche des Objekts 1 von dem Tastkörper 20 abgetastet. Der Tastkörper 20 und das Objekt 1 werden relativ zueinander bewegt. Wenn der Tastkörper 20 die Oberfläche des Objekts 1 berührt, kann eine Messung ausgelöst werden. Dies kann automatisch erfolgen. Stattdessen oder zusätzlich kann es allerdings auch von Hand erfolgen, insbesondere dadurch, dass die Bedienperson einen Schalter oder Druckknopf betätigt, der sich an dem Messtaster 19 und/oder an einer anderen Stelle befinden kann, insbesondere an der Datenbrille 4. Die Auslösung kann auch auf andere Weise erfolgen, beispielsweise über ein Sprachkommando, das über das Mikrofon 13 übertragen wird, oder über das touch-panel 12.

Auf dem Display 9 der Datenbrille 4 können die gemessenen Punkte auf der Oberfläche des Objekts 1 dargestellt werden. Auf diese Weise kann die Bedienperson feststellen, ob zulässige Messpunkte ermittelt worden sind und/oder welche weiteren Messpunkte noch ermittelt werden müssen.

Mit der Ausführungsform nach Fig. 3 kann folgendes Verfahren durchgeführt werden: Während der Vermessung des Objekts 1 mit dem 3D-Messgerät 2 muss die Bedienperson den Tastkörper 20 und/oder das Objekt 1 bewegen, damit der Tastkörper 20 die Oberfläche des Objekts 1 an verschiedenen Stellen berührt, sodass aus unterschiedlichen Messpunkten die benötigten 3D-Daten des Objekts 1 zusammengesetzt werden können. Üblicherweise wird der Tastkörper 20 von der Bedienperson per Hand geführt und dabei von dem stationären Tracking-System 15 erfasst, um die Daten in ein gemeinsames Koordinatensystem überführen zu können.

Die aktuelle Position des Tastkörpers 20 wird von dem PC 7 berechnet. Sie kann über WLAN auf das Display 9 der Datenbrille 4 übertragen und dargestellt werden. Zusätzlich können noch weitere Status-Informationen angezeigt werden, insbesondere die Information, ob sich der Tastkörper 20 innerhalb des gültigen Messvolumens des Tracking-Systems 15 befindet.

Die Bedienperson kann über Sprachkommandos, die von dem Mikrofon 13 übertragen werden, oder über das touch-panel 12 an der Datenbrille 4 die Messparameter einstellen, beispielsweise die Eigenschaften des Tastkörpers 20. Die Befehle können per WLAN von der Datenbrille 4 an den PC 7 übertragen werden. Die Punkterfassung kann ebenfalls über die Datenbrille 4 oder durch einen Schalter an dem Messtaster 19 ausgelöst werden. Vorteilhaft ist es, die Punkterfassung über die Datenbrille auszulösen, damit der Tastkörper 20 bei der Punkterfassung nicht versehentlich durch einen Druck auf den Schalter an dem Messtaster 19 bewegt wird.

Der PC 7 berechnet aus den Daten des Tastkörpers 20 und des Tracking-Systems 15 die 3D-Daten und fügt diese den bereits erfassten und berechneten 3D-Daten hinzu. Während der Punkterfassung können auch Informationen über die erfassten 3D-Daten auf dem Display 9 der Datenbrille 4 dargestellt werden. Dadurch kann die Bedienperson beurteilen, welche Teil-Oberflächen des Objekts bereits erfasst wurden und/oder noch erfasst werden müssen. Auch die Eigenschaften von getasteten Geometrie-Elementen, beispielsweise der Durchmesser von Bohrungen, können auf dem Display 9 der Datenbrille 4 angezeigt werden. Die Bedienperson kann mit weiteren Messungen fortfahren. Sie muss erst nach der vollständigen Erfassung des Objekts 1 an den PC 7 bzw. an dessen Bildschirm 8 zurückkehren.

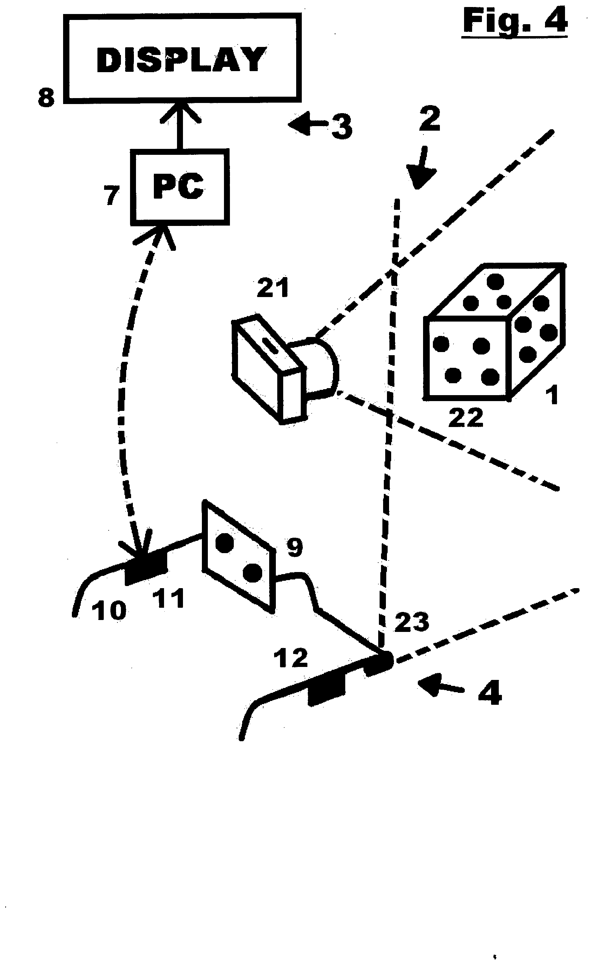

Bei der Ausführungsform nach Fig. 4 sind übereinstimmende Teile mit denselben Bezugszeichen versehen; sie werden nicht erneut beschrieben. Hier umfasst das 3D-Messgerät 2 eine Photogrammmetriekamera 21. An dem Objekt 1 sind Messmarken 22 angebracht. Die Messmarken 22 können kodiert sein. Dabei ist es möglich, dass die Messmarken 22 in sich kodiert sind. Stattdessen oder zusätzlich können sie durch ihre Anordnung kodiert sein.

Im Betrieb wird durch die Photogrammmetriekamera 21 eine Aufnahme einer Teil-Oberfläche des Objekts 1 mit den darauf befindlichen Messmarken 22 hergestellt. Die bisher aufgenommene Teiloberfläche des Objekts 1 kann auf dem Display 9 der Datenbrille 4 dargestellt werden. Auf diese Weise erfährt die Bedienperson, welche Teil-Oberflächen des Objekts 1 bereits aufgenommen worden sind und welche Teil-Oberflächen des Objekts 1 noch aufgenommen werden müssen.

An der Photogrammmetriekamera 21 ist ein Auslöser vorgesehen, durch den eine Aufnahme des Objekts 1 ausgelöst werden kann.

Mit der Ausführungsform nach Fig. 4 kann folgendes Verfahren durchgeführt werden: Während der Vermessung des Objekts 1 mit der Photogrammmetriekamera 21 muss die Bedienperson die Photogrammmetriekamera 21 und/oder das Objekt 1 bewegen, damit das Objekt 1 aus unterschiedlichen Blickwinkeln aufgenommen werden kann und die 3D-Daten des gesamten Objekts 1 zusammengesetzt werden können. Üblicherweise wird das Objekt 1 oder ein geeigneter Rahmen mit Messmarken 22 beklebt, deren Position als 3D-Punktliste berechnet wird.

Die Bilder der Photogrammmetriekamera 21 können per Funk an den PC 7 geschickt werden, der daraus die 3D-Punktliste berechnet. Diese 3D-Punkte können über WLAN auf das Display 9 der Datenbrille 4 übertragen und dargestellt werden. Zusätzlich können noch weitere Status-Informationen angezeigt werden, insbesondere die Qualität der 3D-Punkte und/oder die Information, in welchen Bereichen des Objekts 1 noch Aufnahmen gemacht werden müssen und/oder ob die Belichtungseinstellungen der Photogrammmetriekamera 21 korrekt sind.

An der Datenbrille 4 ist eine weitere Kamera 23 vorgesehen. Die Kamera 23 ist am vorderen Ende eines Bügels der Datenbrille 4 angeordnet. Die Bedienperson kann mit der Kamera 23 zusätzlich eines oder mehrere weitere Bilder aufnehmen. Die Aufnahme der Bilder kann über Sprachkommandos, die von dem Mikrofon 13 übertragen werden, oder über das touch-panel 12 an der Datenbrille 4 ausgelöst werden. Diese Bilder können ebenfalls an den PC 7 übertragen werden, beispielsweise per WLAN. Dies kann auch laufend geschehen. Auf diese Weise kann ein Live-Video erzeugt und dargestellt werden.

Der PC 7 berechnet aus den Bildern der Kamera 23 die aktuelle Lage der Datenbrille 14 in Bezug auf die 3D-Punktliste. Diese Position kann wiederum auf das Display 9 der Datenbrille 4 übertragen und dort angezeigt werden. Dadurch kann die Bedienperson insbesondere beurteilen, in welchen Bereichen des Objekts 1 zusätzliche Bilder der Photogrammmetriekamera 21 erforderlich sind. Dieser Vorgang wird wiederholt, bis das Objekt 1 vollständig erfasst worden ist. Erst dann muss die Bedienperson wieder an den PC 7 bzw. an dessen Bildschirm 8 zurückkehren.

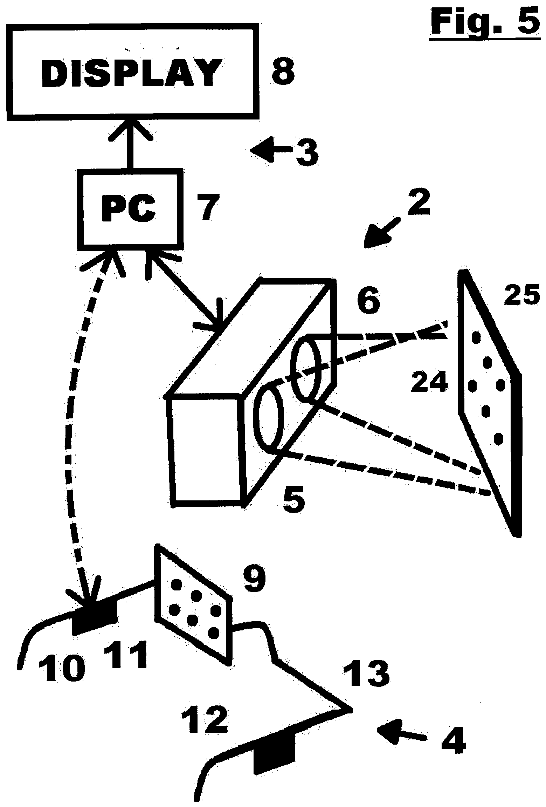

Bei der Ausführungsform nach Fig. 5 sind erneut übereinstimmende Teile mit denselben Bezugszeichen versehen, sodass sie nicht erneut beschrieben werden müssen. Die Fig. 5 zeigt eine Vorrichtung zur Durchführung eines Verfahrens zum Kalibrieren einer Vorrichtung zum Bestimmen der 3D-Koordinaten eines Objekts.

Die Vorrichtung umfasst ein 3D-Messgerät 2, eine Kalibrierplatte 24 und eine Datenbrille 4. Das 3D-Messgerät ist wie bei der Ausführungsform nach Fig. 1 als 3D-Sensor ausgebildet. An der Kalibrierplatte 24 sind Messmarken 25 angebracht.

Im Betrieb bewegt die Bedienperson den 3D-Sensor 2 und/oder die Kalibrierplatte 24, damit aus unterschiedlichen, vorgegebenen Blickwinkeln auf die Kalibrierplatte 24 die Kalibrierung des Systems berechnet werden kann. Dies ist vorteilhaft oder erforderlich, um bei den anschließenden Messungen absolut genaue 3D-Daten erzeugen zu können.

Das Live-Kamera-Bild des 3D-Sensors 2 wird vom PC 7 erfasst und über WLAN auf das Display 9 der Datenbrille 4 übertragen. Auf dem Display 9 wird auch die nächst Messposition angezeigt. Zusätzlich können weitere Status-Informationen angezeigt werden. Dadurch kann der Anwender beispielsweise beurteilen, ob die Belichtungseinstellungen der Kamera 6 des 3D-Sensors 2 korrekt sind.

Die Bedienperson stellt die Messparameter ein, insbesondere die Belichtungszeit. Dies kann über Sprachkommandos erfolgen, die von dem Mikrofon 13 aufgenommen werden, und/oder über das touch-panel 12 an der Datenbrille 4. Anschließend kann die Messung ausgelöst werden, wie oben beschrieben. Die Befehle werden per WLAN von der Datenbrille 4 an den PC 7 übertragen.

Der Steuerungs-PC 7 führt die Kalibriermessung durch. Dabei werden durch den Projektor 5 des 3D-Sensors unterschiedliche Muster auf die Kalibrierplatte 24 projiziert, die die Kamera 6 des 3D-Sensors 2 erfasst. Daraus kann der PC 7 die Kalibrierdaten berechnen. Nach der Messung kann der PC 7 die Qualität der Daten analysieren und das Ergebnis auf dem Display 9 der Datenbrille 4 darstellen.

Die Bedienperson kann die Messung bestätigen, was über Sprachkommandos an das Mikrofon 13 oder das touch-panel 12 erfolgen kann. Durch die Bestätigung übernimmt der PC 7 die Kalibrierdaten. Dieser Schritt kann allerdings auch automatisch erfolgen.

Anschließend bewegt die Bedienperson erneut den 3D-Sensor 2 und/oder die Kalibrierplatte 24 und führt das beschriebene Verfahren erneut durch. Er muss erst dann an den PC 7 bzw. dessen Bildschirm 8 zurückkehren, wenn alle Kalibriermessungen durchgeführt worden sind. Der PC 7 berechnet daraus selbsttätig die Sensorkalibrierung.

## Patentansprüche

1. Verfahren zum Bestimmen der 3D-Koordinaten eines Objekts (1),
bei dem eine Teil-Oberfläche des Objekts (1) durch ein 3D-Messgerät (2) aufgenommen und die 3D-Koordinaten dieser Teil-Oberfläche des Objekts (1) bestimmt werden,
weitere Teil-Oberflächen des Objekts (1) durch das 3D-Messgerät (2) aufgenommen und die 3D-Koordinaten dieser Teil-Oberflächen bestimmt werden
und die 3D-Koordinaten der Teil-Oberflächen des Objekts (1) von einer Verarbeitungseinrichtung (3) zusammengesetzt werden,
wobei die Aufnahmen und/oder die 3D-Koordinaten einer oder mehrerer Teil-Oberflächen des Objekts (1) auf einer Datenbrille (4) dargestellt werden,
**dadurch gekennzeichnet,**
**dass** das Messvolumen des 3D-Messgeräts (2) auf der Datenbrille (4) angezeigt wird, so dass eine Bedienperson beurteilen kann, welche Teil-Oberflächen erfasst werden können, und/oder dass das 3D-Messgerät einen Scanner (14) umfasst, dessen Position und Orientierung durch ein Tracking-System (15) bestimmt wird, wobei das Messvolumen des Tracking-Systems (15) auf der Datenbrille (4) dargestellt wird, so das eine Bedienperson sicherstellen kann, dass sich der Scanner (14) innerhalb des Messvolumens des Tracking-Systems (15) befindet.

2. Verfahren nach Anspruch 1, **dadurch gekennzeichnet, dass** das 3D-Messgerät (2) einen Projektor (5) zum Projizieren eines Musters auf das Objekt (1) und eine Kamera (2) zum Aufnehmen von Bildern des Objekts (1) umfasst, wobei vorzugsweise eine oder die Kamera (6) Referenzmarken aufnimmt und/oder wobei vorzugsweise die Position und Orientierung der Kamera (6) von dem Tracking-System (15) bestimmt wird.

3. Verfahren nach einem der vorhergehenden Ansprüche, **dadurch gekennzeichnet, dass** das 3D-Messgerät (2) einen Tastkörper (20) umfasst, dessen Position durch das Tracking-System (15) bestimmt wird.

4. Verfahren nach einem der vorhergehenden Ansprüche, **dadurch gekennzeichnet, dass** das 3D-Messgerät (2) eine Photogrammmetriekamera (21) umfasst und dass an dem Objekt (1) und/oder in dessen Umgebung Messmarken (22) angebracht sind.

5. Verfahren nach einem der vorangegangegen Ansprüchen zum Kalibrieren oder zum Überprüfen der Kalibrierung einer Vorrichtung zum Bestimmen der 3D-Koordinaten eines Objekts (1),
wobei das 3D-Messgerät (2) einen Projektor (5) zum Projizieren eines Musters auf das Objekt (1) und eine Kamera (6) zum Aufnehmen von Bildern des Objekts (1) umfasst,
wobei das 3D-Messgerät (2) eine Kalibrierplatte (24) aus einer oder mehreren Positionen aufnimmt,
und wobei die Aufnahme und/oder die weitere oder weiteren Aufnahmen auf der Datenbrille (4) dargestellt werden.

6. Verfahren nach einem der vorhergehenden Ansprüche, **dadurch gekennzeichnet, dass** die Datenbrille (4) eine Datenempfangseinrichtung (10) zum Empfangen von Daten von einer oder der Verarbeitungseinrichtung (3) aufweist und/oder dass die Datenbrille (4) eine Datenübertragungseinrichtung (11, 12, 13) zum Übertragen von Daten zu einer oder Verarbeitungseinrichtung (3) aufweist, wobei vorzugsweise auf der Datenbrille (4) weitere Daten dargestellt werden.

7. Vorrichtung zur Durchführung des Verfahrens nach einem der Ansprüche 1 bis 6, umfassend
ein 3D-Messgerät (2) zum Aufnehmen von Teil-Oberflächen des Objekts (1) und zum Bestimmen der 3D-Koordinaten dieser Teil-Oberflächen des Objekts (1),
eine Verarbeitungseinrichtung (3) zum Zusammensetzen der 3D-Koordinaten der Teil-Oberflächen des Objekts (1)
und eine Datenbrille (4) zum Darstellen der Aufnahmen und/oder der 3D-Koordinaten einer oder mehrerer Teil-Oberflächen des Objekts (1),
**dadurch gekennzeichnet,**
**dass** das 3D-Messgerät (2) so ausgestaltet ist, dass das Messvolumen des 3D-Messgeräts (2) auf der Datenbrille (4) angezeigt wird, so dass eine Bedienperson beurteilen kann, welche Teil-Oberflächen erfasst werden können, und/oder dass das 3D-Messgerät einen Scanner (14) umfasst, dessen Position und Orientierung durch ein Tracking-System (15) bestimmt wird, wobei das Messvolumen des Tracking-Systems (15) auf der Datenbrille (4) dargestellt wird, so das eine Bedienperson sicherstellen kann, dass sich der Scanner (14) innerhalb des Messvolumens des Tracking-Systems (15) befindet.

8. Vorrichtung nach Anspruch 7, **dadurch gekennzeichnet, dass** das 3D-Messgerät (2) einen Projektor (5) zum Projizieren eines Musters auf das Objekt (1) und eine Kamera (6) zum Aufnehmen von Bildern des Objekts (1) umfasst, wobei vorzugsweise eine oder die Kamera (6) Referenzmarken aufnimmt.

9. Vorrichtung nach Anspruch 8 zur Durchführung des Verfahrens nach Anspruch 5, wobei das 3D-Messgerät (2) eine Kalibrierplatte (24) umfasst.

10. Vorrichtung nach einem der Ansprüche 7 bis 9, **gekennzeichnet durch** einen Tastkörper (20), dessen Position **durch** das Tracking-System (15) bestimmt wird.

11. Vorrichtung nach einem der Ansprüche 7 bis 10, **gekennzeichnet durch** eine Photogrammmetriekamera (21).

12. Vorrichtung nach einem der Ansprüche 7 bis 11, **dadurch gekennzeichnet, dass** die Datenbrille (4) eine Datenempfangseinrichtung (10) zum Empfangen von Daten von einer oder der Verarbeitungseinrichtung (3) aufweist und/oder dass die Datenbrille (4) eine Datenübertragungseinrichtung (11, 12, 13) zum Übertragen von Daten zu einer oder der Verarbeitungseinrichtung (3) aufweist.

## Claims

1. Process for determining the 3-D coordinates of an object (1),
wherein a partial surface of the object (1) is recorded by a piece of 3-D measuring equipment (2) and the 3-D coordinates of this partial surface of the object (1) are determined,
further partial surfaces of the object (1) are recorded by the piece of 3-D measuring equipment (2) and the 3-D coordinates of these partial surfaces are determined,
and the 3-D coordinates of the partial surfaces of the object (1) are pieced together by a processing apparatus (3),
the recordings and/or the 3-D coordinates of one or more partial surfaces of the object (1) being displayed on a pair of smart glasses (4),
**characterized**
**in that** the measured volume of the piece of 3-D measuring equipment (2) is displayed on the pair of smart glasses (4) so that an operator can assess which partial surfaces can be detected and/or in that the piece of 3-D measuring equipment comprises a scanner (14), the position and orientation of which are determined by a tracking system (15), the measured volume of the tracking system (15) being displayed on the pair of smart glasses (4) so that an operator can ensure that the scanner (14) is situated within the measured volume of the tracking system (15).

2. Process according to Claim 1, **characterized in that** the piece of 3-D measuring equipment (2) comprises a projector (5) for projecting a pattern onto the object (1) and a camera (2) for recording images of the object (1), a camera or the camera (6) preferably recording reference marks and/or the position and orientation of the camera (6) preferably being determined by the tracking system (15) .

3. Process according to either of the preceding claims, **characterized in that** the piece of 3-D measuring equipment (2) comprises a sensing unit (20), the position of which is determined by the tracking system (15).

4. Process according to any one of the preceding claims, **characterized in that** the piece of 3-D measuring equipment (2) comprises a photogrammetry camera (21) and **in that** measuring marks (22) are applied to the object (1) and/or in its vicinity.

5. Process according to any one of the preceding claims for calibrating or for checking the calibration of a device for determining the 3-D coordinates of an object (1),
the piece of 3-D measuring equipment (2) comprising a projector (5) for projecting a pattern onto the object (1) and a camera (6) for recording images of the object (1),
the piece of 3-D measuring equipment (2) recording a calibration plate (24) from one or more positions,
and the recording and/or the further recording or recordings being displayed on the pair of smart glasses (4).

6. Process according to any one of the preceding claims, **characterized in that** the pair of smart glasses (4) has a data reception apparatus (10) for the reception of data from a processing apparatus or the processing apparatus (3) and/or **in that** the pair of smart glasses (4) has a data transmission apparatus (11, 12, 13) for the transmission of data to a processing apparatus or the processing apparatus (3), further data preferably being displayed on the pair of smart glasses (4).

7. Device for implementing the process according to any one of Claims 1 to 6, comprising:
a piece of 3-D measuring equipment (2) for recording partial surfaces of the object (1) and for determining the 3-D coordinates of these partial surfaces of the object (1),
a processing apparatus (3) for piecing together the 3-D coordinates of the partial surfaces of the object (1),
and a pair of smart glasses (4) for displaying the recordings and/or the 3-D coordinates of one or more partial surfaces of the object (1),
**characterized**
**in that** the piece of 3-D measuring equipment (2) is configured in such a way that the measured volume of the piece of 3-D measuring equipment (2) is displayed on the pair of smart glasses (4) so that an operator can assess which partial surfaces can be detected and/or that the piece of 3-D measuring equipment comprises a scanner (14), the position and orientation of which are determined by a tracking system (15), the measured volume of the tracking system (15) being displayed on the pair of smart glasses (4) so that an operator can ensure that the scanner (14) is situated within the measured volume of the tracking system (15).

8. Device according to Claim 7, **characterized in that** the piece of 3-D measuring equipment (2) comprises a projector (5) for projecting a pattern onto the object (1) and a camera (6) for recording images of the object (1), a camera or the camera (6) preferably recording reference marks.

9. Device according to Claim 8 for implementing the method according to Claim 5, wherein the piece of 3-D measuring equipment (2) comprises a calibration plate (24).

10. Device according to any one of Claims 7 to 9, **characterized by** a sensing unit (20), the position of which is determined by the tracking system (15).

11. Device according to any one of Claims 7 to 10, **characterized by** a photogrammetry camera (21).

12. Device according to any one of Claims 7 to 11, **characterized in that** the pair of smart glasses (4) has a data reception apparatus (10) for the reception of data from a processing apparatus or the processing apparatus (3) and/or **in that** the pair of smart glasses (4) has a data transmission apparatus (11, 12, 13) for the transmission of data to a processing apparatus or the processing apparatus (3) .

## Revendications

1. Procédé pour déterminer les coordonnées 3D d'un objet (1),
avec lequel une surface partielle de l'objet (1) est enregistrée par un appareil de mesure 3D (2) et les coordonnées 3D de cette surface partielle de l'objet (1) sont déterminées,
des surfaces partielles supplémentaires de l'objet (1) sont enregistrées par l'appareil de mesure 3D (2) et les coordonnées 3D de ces surfaces partielles sont déterminées,
et les coordonnées 3D des surfaces partielles de l'objet (1) sont assemblées par un dispositif de traitement (3), les enregistrements et/ou les coordonnées 3D d'une ou plusieurs surfaces partielles de l'objet (1) étant représentés sur des lunettes connectées (4),
**caractérisé**
**en ce que** le volume de mesure de l'appareil de mesure 3D (2) est affiché sur les lunettes connectées (4), de sorte qu'un opérateur peut évaluer les surfaces partielles qui peuvent être acquises, et/ou en ce que l'appareil de mesure 3D comporte un scanneur (14) dont la position et l'orientation sont déterminées par un système de suivi (15), le volume de mesure du système de suivi (15) étant représenté sur les lunettes connectées (4), de sorte qu'un opérateur peut s'assurer que le scanneur (14) se trouve à l'intérieur du volume de mesure du système de suivi (15).

2. Procédé selon la revendication 1, **caractérisé en ce que** l'appareil de mesure 3D (2) comporte un projecteur (5) destiné à projeter un modèle sur l'objet (1) et une caméra (2) destinée à enregistrer des images de l'objet (1), une ou la caméra (6) enregistrant de préférence des repères de référence et/ou la position et l'orientation de la caméra (6) étant déterminées par le système de suivi (15).

3. Procédé selon l'une des revendications précédentes, **caractérisé en ce que** l'appareil de mesure 3D (2) comporte un corps de palpage (20) dont la position est déterminée par le système de suivi (15).

4. Procédé selon l'une des revendications précédentes, **caractérisé en ce que** l'appareil de mesure 3D (2) comporte une caméra de photogrammétrie (21) et **en ce que** des repères de mesure (22) sont apposés sur l'objet (1) et/ou dans son environnement.

5. Procédé selon l'une des revendications précédentes pour l'étalonnage ou pour le contrôle de l'étalonnage d'un arrangement servant à la détermination des coordonnées 3D d'un objet (1),
l'appareil de mesure 3D (2) comportant un projecteur (5) destiné à projeter un modèle sur l'objet (1) et une caméra (6) destinée à enregistrer des images de l'objet (1), l'appareil de mesure 3D (2) enregistrant une plaque d'étalonnage (24) depuis une ou plusieurs positions,
et l'enregistrement et/ou le ou les enregistrements supplémentaires étant représentés sur les lunettes connectées (4).

6. Procédé selon l'une des revendications précédentes, **caractérisé en ce que** les lunettes connectées (4) possèdent un dispositif de réception de données (10) destiné à recevoir des données d'un ou du dispositif de traitement (3) et/ou **en ce que** les lunettes connectées (4) possèdent un dispositif de transmission de données (11, 12, 13) destiné à transmettre les données à un ou au dispositif de traitement (3), des données supplémentaires étant de préférence représentées sur les lunettes connectées (4).

7. Arrangement pour mettre en œuvre le procédé selon l'une des revendications 1 à 6, comprenant
un appareil de mesure 3D (2) destiné à enregistrer des surfaces partielles de l'objet (1) et à déterminer les coordonnées 3D de ces surfaces partielles de l'objet (1), un dispositif de traitement (3) destiné à assembler les coordonnées 3D des surfaces partielles de l'objet (1) et des lunettes connectées (4) destinées à représenter les enregistrements et/ou les coordonnées 3D d'une ou plusieurs surfaces partielles de l'objet (1), **caractérisé**
**en ce que** l'appareil de mesure 3D (2) est configuré de telle sorte que le volume de mesure de l'appareil de mesure 3D (2) est affiché sur les lunettes connectées (4), de sorte qu'un opérateur peut évaluer les surfaces partielles qui peuvent être acquises, et/ou en ce que l'appareil de mesure 3D comporte un scanneur (14) dont la position et l'orientation sont déterminées par un système de suivi (15), le volume de mesure du système de suivi (15) étant représenté sur les lunettes connectées (4), de sorte qu'un opérateur peut s'assurer que le scanneur (14) se trouve à l'intérieur du volume de mesure du système de suivi (15).

8. Arrangement selon la revendication 7, **caractérisé en ce que** l'appareil de mesure 3D (2) comporte un projecteur (5) destiné à projeter un modèle sur l'objet (1) et une caméra (6) destinée à enregistrer des images de l'objet (1), une ou la caméra (6) enregistrant de préférence des repères de référence.

9. Arrangement selon la revendication 8 pour mettre en œuvre le procédé selon la revendication 5, **caractérisé en ce que** l'appareil de mesure 3D (2) comporte une plaque d'étalonnage (24).

10. Arrangement selon l'une des revendications 7 à 9, **caractérisé par** un corps de palpage (20) dont la position est déterminée par le système de suivi (15).

11. Arrangement selon l'une des revendications 7 à 10, **caractérisé par** une caméra de photogrammétrie (21).

12. Arrangement selon l'une des revendications 7 à 11, **caractérisé en ce que** les lunettes connectées (4) possèdent un dispositif de réception de données (10) destiné à recevoir des données d'un ou du dispositif de traitement (3) et/ou **en ce que** les lunettes connectées (4) possèdent un dispositif de transmission de données (11, 12, 13) destiné à transmettre les données à un ou au dispositif de traitement (3).
